# EUROPEAN PATENT APPLICATION

(11) **EP 4 760 506 A1**
(43) Date of publication of application: **17.06.2026**
(21) Application number: 24948092.2
(22) Date of filing: 18.12.2024
(51) Int. Cl.: G06F 9/50

(54) **DATA PROCESSING METHOD, DATA PROCESSING APPARATUS, PROCESSOR, CHIP, COMPUTING DEVICE, STORAGE MEDIUM AND COMPUTER PROGRAM PRODUCT**

(30) Priority: 23.09.2024 CN 202411329980
(71) Applicant: Hygon Yunxin Integrated Circuit Design (Shanghai) Co., Ltd., Shanghai 200131 (CN)
(72) Inventor: LI, Pu, Shanghai 200131 (CN); YING, Zhiwei, Shanghai 200131 (CN); YANG, Depei, Shanghai 200131 (CN)
(74) Representative: Maiwald GmbH
(86) International application number: PCT/CN2024/140234
(87) International publication number: WO 2026/060844

(57) **Abstract**

Embodiments of the present disclosure provide a data processing method, a data processing apparatus, a processor, a chip, a computing device, a storage medium, and a computer program product. The data processing method is applied to a host processor core bound with a network card and configured with a cryptographic coprocessor, and a data vector is obtained by receiving a data packet to be processed sent successively by a network end and then executing network layer processing. The data vector is sequentially written into a ring buffer, so that the host processor core and the slave processor core acquire the data vector. After acquiring the data vector, encryption/decryption processing is performed on data indicated by the data vector using the cryptographic coprocessor to obtain first result data, and result information is fed back to the ring buffer. The result data is sent to the network end based on an indication of the data vector in the ring buffer. The result data includes first result data, and second result data obtained from the processor core after performing encryption/decryption processing on the data indicated by the data vector using an encryption/decryption program, thereby achieving full utilization of the computing resources.

## Description

This application claims the priority to and benefits of the Chinese Patent Application, No. 202411329980.X, which was filed on September 23, 2024. All the aforementioned patent applications are hereby incorporated by reference in their entireties.

### TECHNICAL FIELD

Embodiments of the present disclosure relate to a data processing method, a data processing apparatus, a processor, a chip, a computing device, a storage medium, and a computer program product.

### BACKGROUND

With the development of information technology, the data security is more and more important. The data security refers to the process of using technical means to identify the relative importance, sensitivity and compliance of various types of data sets such as files, databases and account information on the network, and taking appropriate security control measures to protect the data sets. For example, various types of data on the network are protected by the Internet Protocol Security (IPSec).

However, IPSec has a large computational demand in the process of processing data on the network, with large consumption of computational resources, so that it is easy to cause IPSec performance bottlenecks when processing large data traffic.

In this context, how to make full use of computing resources to ensure the computational requirements of IPSec and improve efficiency of data processing has become a technical problem to be solved urgently by a person skilled in the art.

### SUMMARY

In view of the above, embodiments of the present disclosure provide a data processing method, a data processing apparatus, a processor, a chip, a computing device, a storage medium, and a computer program product to achieve full utilization of computing resources and improve efficiency of data processing.

To achieve the above object, embodiments of the present disclosure provide the following technical solutions.

In a first aspect, embodiments of the present disclosure provide a data processing method, which is applied to a host processor core bound to a network card, and the host processor core is configured with a cryptographic coprocessor, and the method includes:
receiving a data packet to be processed sent successively from a network end;
performing network layer processing on the data packet to be processed to obtain a data vector;
writing the data vector sequentially into a ring buffer, so that the host processor core and a slave processor core located in a computing architecture where the host processor core is located acquire the data vector;
after acquiring the data vector, performing encryption/decryption processing on data indicated by the data vector by using the cryptographic coprocessor to obtain first result data, and feeding back result information to the ring buffer; and
sending result data after the encryption/decryption processing to the network end based on an indication of the data vector in the ring buffer, where the result data includes the first result data and second result data; the second result data is obtained after the slave processor core performs the encryption/decryption processing on the data indicated by the data vector by using an encryption/decryption program after acquiring the data vector; and the result information is fed back to the ring buffer after obtaining the second result data.

Optionally, the cryptographic coprocessor is configured with a direct memory access queue;
after acquiring the data vector, and before performing the encryption/decryption processing on the data indicated by the data vector by using the cryptographic coprocessor, the method further includes:
sending the data vector that is acquired to the direct memory access queue,
where performing the encryption/decryption processing on the data indicated by the data vector by using the cryptographic coprocessor includes: performing the encryption/decryption processing on the data indicated by the data vector in the direct memory access queue by using the cryptographic coprocessor.

Optionally, the ring buffer includes a head and a tail; a head pointer indicating a head position is provided corresponding to the head; and a tail pointer indicating a tail position is provided corresponding to the tail;
where writing the data vector sequentially into the ring buffer includes:
writing the data vector sequentially to the head position indicated by the head pointer of the ring buffer, where the head position indicated by the head pointer of the ring buffer is advanced by one bit when each data vector is written,
where sending the result data after the encryption/decryption processing to the network end based on the indication of the data vector in the ring buffer includes:
sending the result data after performing the encryption/decryption processing to the network end according to the tail position indicated by the tail pointer and based on the indication of the data vector in the ring buffer, where the tail position indicated by the tail pointer of the ring buffer is advanced by one bit when each result data is sent.

Optionally, a status flag bit is set corresponding to the data vector in the ring buffer, and the status flag bit is used for indicating an encryption/decryption processing status of the data indicated by the data vector; and
after feeding back the result information to the ring buffer, the status flag bit is updated based on the result information, where in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

Optionally, the result data after performing the encryption/decryption processing is sent to the network end based on the indication of the data vector in the ring buffer in which the status flag bit of a corresponding data vector is the second value.

Optionally, the host processor core acquires the data vector in the ring buffer based on a Compare and Swap (CAS) mechanism.

Optionally, in response to the slave processor core being configured with the cryptographic coprocessor, the second result data included in the result data is obtained after performing the encryption/decryption processing on the data indicated by the data vector by using the cryptographic coprocessor after the slave processor core obtains the data vector; and after obtaining the second result data, the result information is fed back to the ring buffer.

In a second aspect, embodiments of the present disclosure provide a data processing method, which is applied to a slave processor core, and the method includes:
acquiring a data vector in a ring buffer, where the data vector is obtained by performing network layer processing on a data packet to be processed when a host processor core located in a computing architecture where the slave processor core is located receives the data packet to be processed sent by a network end, and the data vector is written in the ring buffer sequentially; the host processor core is bound with a network card and is configured with a cryptographic coprocessor; and
performing encryption/decryption processing on data indicated by the data vector that is acquired by using an encryption/decryption program to obtain second result data, and feeding back result information to the ring buffer.

Optionally, the slave processor core acquires the data vector in the ring buffer based on a Compare and Swap (CAS) mechanism.

Optionally, in response to the slave processor core being configured with the cryptographic coprocessor, the second result data is obtained after performing the encryption/decryption processing on the data indicated by the data vector that is acquired by using the cryptographic coprocessor; and the result information is fed back to the ring buffer after obtaining the second result data.

Optionally, a status flag bit is set corresponding to the data vector in the ring buffer, and the status flag bit is used for indicating an encryption/decryption processing status of the data indicated by the data vector; and
after feeding back the result information to the ring buffer, the status flag bit is updated based on the result information, where in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

In a third aspect, embodiments of the present disclosure provide a data processing apparatus, which is applied to a host processor core bound to a network card, and the host processor core is configured with a cryptographic coprocessor, and the apparatus includes:
a receiving unit, which is configured to receive a data packet to be processed sent successively from a network end;
a processing unit, which is configured to perform network layer processing on the data packet to be processed to obtain a data vector;
a writing unit, which is configured to write the data vector sequentially into a ring buffer, so that the host processor core and a slave processor core located in a computing architecture where the host processor core is located acquire the data vector;
a main execution unit, which is configured to, after acquiring the data vector, perform encryption/decryption processing on data indicated by the data vector by using the cryptographic coprocessor to obtain first result data, and feed back result information to the ring buffer; and
a sending unit, which is configured to send result data after the encryption/decryption processing to the network end based on an indication of the data vector in the ring buffer, where the result data includes the first result data and second result data; the second result data is obtained after the slave processor core performs the encryption/decryption processing on the data indicated by the data vector by using an encryption/decryption program after acquiring the data vector; and the result information is fed back to the ring buffer after obtaining the second result data.

In a fourth aspect, embodiments of the present disclosure provide a data processing apparatus, which is applied to a slave processor core, including:
an acquisition unit, which is configured to acquire a data vector in a ring buffer; where the data vector is obtained by performing network layer processing on a data packet to be processed when a host processor core located in a computing architecture where the slave processor core is located receives the data packet to be processed sent by a network end, and the data vector is written in the ring buffer sequentially; the host processor core is bound with a network card and is configured with a cryptographic coprocessor; and
a slave execution unit, which is configured to perform encryption/decryption processing on the data indicated by the data vector that is acquired using an encryption/decryption program to obtain second result data, and feed back the result information to the ring buffer.

In a fifth aspect, embodiments of the present disclosure provide a processor, including: a host processor core, a slave processor core, and an asynchronous engine; where the host processor core is bound with a network card, and is configured with a cryptographic coprocessor;
the host processor core is configured to schedule the asynchronous engine and the cryptographic coprocessor to execute the data processing method according to according to the first aspect; and
the slave processor core is configured to, based on scheduling of the host processor core on the asynchronous engine, perform the data processing method according to the second aspect.

Optionally, the host processor core and the slave processor core are allocated based on at least initial status information of each processor core when the processor is initialized.

In a sixth aspect, embodiments of the present disclosure provide a chip, including the processor according to the fifth aspect.

In a seventh aspect, embodiments of the present disclosure provide a computing device, including the chip according to the six aspect.

In an eighth aspect, embodiments of the present disclosure provide a computer program product including one or more computer-executable instructions, where the one or more computer-executable instructions, when executed, implement the data processing method according to the first aspect or the second aspect.

In a ninth aspect, embodiments of the present disclosure provide a computer program product including one or more computer-executable instructions, where the one or more computer-executable instructions, when executed, implement the data processing method according to the first aspect or the second aspect.

The data processing method provided by the embodiments of the present disclosure may perform network layer processing on received a data packet to be processed sent by a network end based on a host processor core bound to a network card, to obtain a data vector. Then, it may write the data vector successively into a ring buffer, so that the host processor core and a slave processor core located in a computing architecture where the host processor core is located acquire the data vector, thereby fully utilizing the host processor core and the slave processor core to perform encryption/decryption processing, and improving efficiency of the efficiency of data processing.

In addition, after acquiring the data vector, the host processor core, based on the configured cryptographic coprocessor, may perform encryption/decryption processing on the data indicated by the data vector to obtain first result data by using the cryptographic coprocessor, and feed back result information to the ring buffer to realize the encryption/decryption processing on the data indicated by the data vector based on the hardware device (namely, the cryptographic coprocessor). After acquiring the data vector, the slave processor core may perform the encryption/decryption processing on the data indicated by the data vector by using an encryption/decryption program to obtain second result data, and feed back the result information to the ring buffer to realize the encryption/decryption processing on the data indicated by the data vector based on a software program (namely, the encryption/decryption program). Further, the result data after the encryption/decryption processing is sent to the network end based on the indication of the data vector in the ring buffer. It can be seen that the embodiments of the present disclosure can perform the encryption/decryption processing by using both hardware computing resources and software computing resources, effectively guaranteeing the computational requirements of the IPSec.

### BRIEF DESCRIPTION OF DRAWINGS

To more clearly describe the technical solutions in the embodiments of the disclosure, the drawings to be used in the description of the embodiments will be briefly introduced below. The drawings in the following description are only some of the disclosure. It will be apparent to those skilled in the art that other drawings may be obtained from the drawings without any creative works.
Fig. 1 is a schematic diagram of data transmission between communication parties in IPSec;
Fig. 2 is a schematic diagram of a data processing flow in a synchronous engine mode of VPP;
Fig. 3 is a schematic diagram of a data processing flow in a "dpdk_cryptodev" asynchronous engine mode of VPP;
Fig. 4 is an optional schematic flowchart of the data processing method provided by the embodiments of the present disclosure.
Fig. 5 is an optional structural schematic diagram of a ring buffer provided by the embodiments of the present disclosure;
Fig. 6 is a schematic diagram of a data processing flow provided by the embodiments of the present disclosure;
Fig. 7 is a schematic diagram of a performance comparison provided by the embodiments of the present disclosure;
Fig. 8 is an optional schematic diagram of a data processing apparatus provided by the embodiments of the present disclosure;
Fig. 9 is another optional schematic diagram of a data processing apparatus provided by the embodiments of the present disclosure; and
Fig. 10 is an optional block diagram of a computing device provided by the embodiments of the present disclosure.

### DETAILED DESCRIPTION

The technical solutions in the embodiments of the present disclosure will be described clearly and completely in conjunction with the drawings in the embodiments of the present disclosure. Obviously, the described embodiments are only part of the embodiments of the present disclosure, rather than all the embodiments. Based on the embodiments in the present disclosure, all other embodiments obtained by a person of ordinary skill in the art without inventive effort fall within the scope of the present disclosure.

Internet Protocol Security (IPSec) is a collection of protocols and services that provide security for IP networks, mainly used to establish security-protected private networks on insecure public networks, and is a common technology in VPN (Virtual Private Network). IPSec establishes an IPSec tunnel by establishing the IPsec tunnel between two or more private networks on the public network, so that the two communication parties use the IPSec tunnel. VPN connection security is guaranteed by encryption and authentication algorithms. Specifically, the two communication parties can establish a security association by key exchange and form an IPSec tunnel, and the data flowing through the tunnel is protected by encryption and authentication mechanisms, so as to prevent the data from being stolen and tampered during the transmission process and ensure the transmission security of the data.

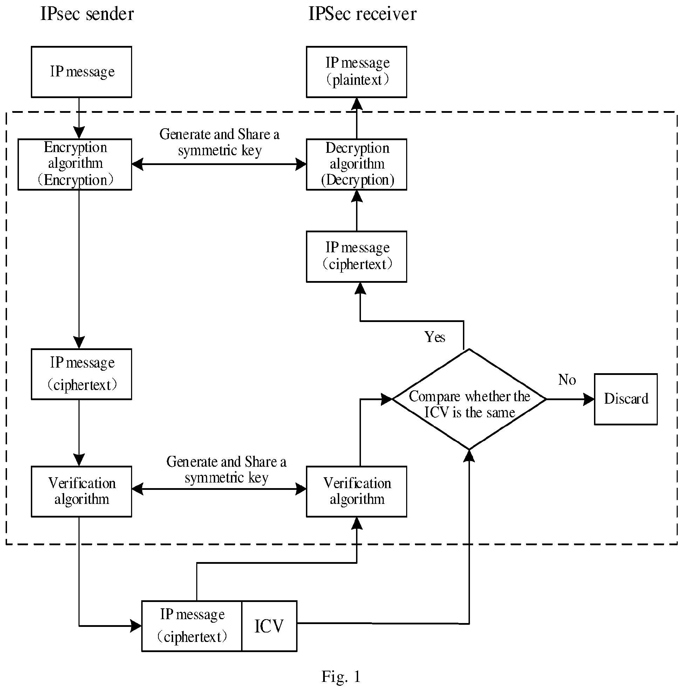

Fig. 1 exemplarily shows a schematic diagram of data transmission between communication parties in IPSec. As shown in Fig. 1, an IPsec sender and an IPSec receiver firstly generate and share a symmetric key, and the generation and sharing of the symmetric key may be realized based on a key exchange protocol. Then, the IPsec sender uses a symmetric key to encrypt the IP message by using an encryption algorithm, that is, encrypting and encapsulating the original IP data to obtain an IP message cipher text. Then, the IPSec sender and the IPSec receiver respectively process the IP message ciphertext via the same verification algorithm and verification key to obtain an integrity check value ICV (Integrity Check Value). Furthermore, the IPSec receiver compares whether the calculated ICV value is the same as the ICV value of the IPSec sender. If so, it means that the IP message ciphertext has not been tampered with in the transmission process. The IPSec receiver uses the same symmetric key as the IPSec sender to decrypt the IP message ciphertext which has passed the verification by using a decryption algorithm to obtain the IP message plaintext, namely, the original IP data. Herein, when the ICV value obtained by comparing and calculating by the IPSec receiver is different from the ICV value obtained by the IPSec sender, it indicates that the IP message ciphertext is tampered during transmission, and the IP message ciphertext can be directly discarded.

In the process of data transmission between the two communication parties of IPSec, the dotted line in the blocks part of the figure has a greater computational demand and consumes a greater computational resource. When the data traffic transmitted between the sender and the receiver of IPSec is large, it is easy to occur performance bottlenecks of data forwarding.

To solve the above problem, as an optional implementation, a synchronous engine in the VPP (Vector Packet Processing) technology can be used for data processing.

It should be noted that VPP has its own IPSec function, providing a set of frameworks for processing IPSec data plane forwarding, and supporting the registration of various encryption/decryption engines to provide algorithm support for IPSec.

VPP can abstract each functional block (namely, a software or hardware module responsible for executing a specific network operation task, and these modules can relate to various stages of data packet processing, such as filtering, encryption, decryption, load balancing, etc.) into a directed graph node (node), and a set of data vectors are input at each node, so that the data vectors can be processed in the same manner within the node, so as to achieve the maximum improvement of the efficiency of CPU instruction caching. Here, after each node completes the execution of one or a type of fixed function, all the nodes can be organized into a tree graph, starting from an entry node, and when one node finishes processing a data vector, the data vector is sent to the next node for processing according to processing logic, and is passed from a receiving node to a sending node, or is discarded in the middle.

Furthermore, to ensure the hit rate of data in cache, VPP can bind the receive queue (RX queue) of the network card with a fixed processor thread (thread). Also, in a multi-core processor, all threads can form a one-to-one relationship with a processor core. Thus, data packet reception by the network card can be handled by a fixed processor core throughout the software run-time. In addition, all processor cores, whether bound to the network card or not, have the ability to handle other VPP nodes.

In data processing, the crypto engine provided by VPP can be divided into a synchronous engine and asynchronous engine. In the mode of the synchronous engine, the call of the caller to the data processing algorithm function is synchronized, that is, when the called function returns, the data has been processed. In the asynchronous engine mode, the call of the caller to the data processing algorithm function is asynchronous, that is, when the called function returns, the data has been arranged to other modules to perform data processing, and then the caller is informed of the processing result by polling or interruption.

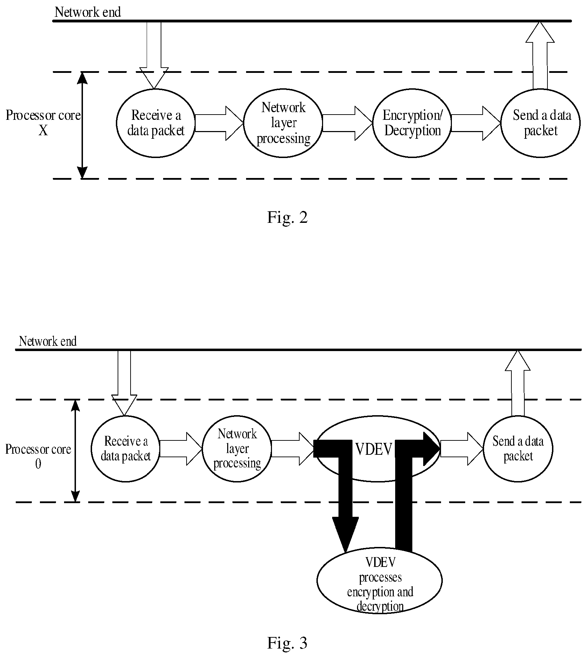

Herein, Fig. 2 exemplarily shows a schematic diagram of a data processing flow in a synchronous engine mode of VPP. As shown in Fig. 2, when the synchronous engine mode based on VPP processes network traffic of an IPSec, for a multi-core processor, to improve network data processing performance, data processing work of a network card can be allocated to a specific processor core X, that is, only a processor core bound with the network card can receive a data packet sent by a network end. The interval of a dotted line shown in Fig. 2 is a thread of the processing core X. On the thread of the processor core X, four stages are experienced, that is, receiving a data packet sent by a network end (namely, receive a data packet), processing network layer processing on the data packet, encryption/decryption processing and sending the data packet that is processed to the network end (namely, send a data packet), which are handled by the processor core. Here, the network layer processing may include: fragmentation and reassembly of a data packet, for example, when the data packet is too large, the network layer is required to divide the data packet into smaller fragments, and the fragmentation information is required to be recorded so as to be able to be correctly assembled when other fragments are subsequently received; data parsing, for example, parsing network protocol headers such as IP and TCP/UDP, determines a destination address, a source address, a port number and a protocol type of a data packet; routing searching, for example, according to a destination address of data, querying a routing table to determine how to forward a data packet; security inspection of data, such as verifying the integrity and identity authentication information of AH or ESP header encapsulated in IPSec data package, so as to ensure the confidentiality of data and the authenticity of source; the establishment of a transmission tunnel, etc.

However, in the synchronous engine mode of VPP, only a single processor core X bound with a network card can execute the whole process of receiving and sending a data packet. When the data traffic exceeds the processing capacity of the processor core X, even if other processor cores in the multi-core processor are in an idle state, they cannot share the processing tasks of processor core X, limiting the concurrent capacity of the multi-core processor, so that the computing resources of the multi-core processor cannot be effectively used.

To take advantage of the multi-threading capability of multi-core processors, an asynchronous engine in the VPP technology may be used for data processing as an optional implementation.

It should be noted that VPP has two asynchronous engines, "sw_scheduler" and "dpdk_cryptodev". "sw_scheduler", i.e., Software Scheduler, is a software scheduling program, which is mainly used for managing the input and output operations of a processor in the VPP, decomposing the processing tasks of the data packet into different processor cores, and realizing high-performance data traffic scheduling in a multi-core environment. "dpdk_cryptodev" is a cryptographic device driver module of the DPDK (Data Plane Development Kit). The dpdk_cryptodev may provide a hardware accelerated based way for the processor to process the encryption/decryption processing of the data packet.

It should be further noted that the Data Plane Development Kit (hereinafter "DPDK ") is a user-space network development platform that focuses on performance optimization of high-speed network data paths, and is generally used for high-performance network applications, such as load balancing, firewalls, switches, etc., and provides a set of libraries and a set of drivers to enable a processor to process data packets quickly. Based on the DPDK, a data packet can be sent and received to a network end. After receiving the data packet sent by the network end, a processing device can divide the data packet into a plurality of groups of data vectors. The data vectors are memory areas with a certain size and correspond to memory address information. Each group of data vectors can contain up to 256 memory addresses of the data packet. Among them, DPDK includes an important component, VDEV (Virtual Device). VDEV is a virtual device driver, and provides an abstraction layer which may be both a software abstraction and a hardware abstraction, allowing a developer to create and configure virtual devices. These virtual devices may be abstract real hardware devices, or software devices developed by a user himself. The real hardware devices include such as a network card, a cryptographic coprocessor, etc. The software devices developed by the users themselves such as openssl encryption/decryption algorithms, loopback interfaces and internal queues.

Furthermore, a high-performance, memory-based network packet queue structure, that is, a ring buffer, is provided during data processing. Data vectors are stored to the ring buffer in a first-in-first-out (FIFO) manner, so that the order of data writing corresponds to the order of data reading, achieving efficient data transfer between a kernel space and a user space, reducing context switching and memory copying in the kernel space, and significantly improving the network throughput and latency.

In the DPDK environment, VPP may utilize DPDK API (an application program interface of DPDK) to create and manage a device by using VDEV. A developer can create a plurality of instances of VDEV, each instance corresponding to a physical network interface or a software simulation interface, so as to directly access the hardware, reduce the overhead of an operating system and realize more efficient data packet processing. VPP configures each network interface as a large, lock-free ring buffer via VDEV, so that data packet reception and sending operations can be performed concurrently between a plurality of processor core threads of the processor, greatly improving network processing capacity.

Taking processor cores 0 to n as a plurality of processor cores for one processor and the processor core 0 bound with a network card as an example, the data processing flow under the "sw_scheduler" asynchronous engine mode of VPP is described. When processing the network traffic of IPSec in the "sw_scheduler" asynchronous engine mode of VPP, to improve the overall performance, it can be configured that only the processor core 0 has the permission to send and receive data packets to the network end. Accordingly, after receiving a data packet sent by a network end, the processor core 0 may perform network layer processing on the data packet, that is, performing corresponding operations according to rules of a network protocol stack, such as checking header information, routing, etc. and combining the data packet that is processed into a data vector and storing same in a specially designed ring buffer. Here, the ring buffer faces the processor core 1 to the processor core n to provide the extraction function of the data vector, so that the calculation task of the encryption/decryption of the data vector stored in the ring buffer can be shared by the processor core 1 to the processor core n, namely, non-blockingly allocating the data vectors to the processor core 1 to the processor core n. When performing the encryption/decryption processing by using a software algorithm, the encryption/decryption program can be a software program for performing a data encryption/decryption operation.

Herein, Fig. 3 exemplarily shows a schematic diagram of a data processing flow in a "dpdk_cryptodev" asynchronous engine mode of VPP. As shown in Fig. 3, when processing network traffic of IPSec in the "dpdk_cryptodev" asynchronous engine mode of VPP, in order to improve the overall performance, the processor core 0 can be configured for binding with a network card and having a permission to receive a data packet to a network end. After receiving the data packet sent by the network end, the processor core 0 can perform network layer processing on the data packet, combine the data packet that is processed into the data vector, and send the same to a VDEV abstracted by the cryptographic coprocessor managed by DPDK for the encryption/decryption processing.

However, for the asynchronous engine mode of VPP, the "sw_scheduler" asynchronous engine may send computational tasks to the processor cores 1 to n for execution, taking advantage of the software computational capabilities of a plurality of processor cores, but not the cryptographic coprocessors. However, the "dpdk_cryptodev" asynchronous engine can only use the core 0 bound with the network card to satisfy the need of delivering data to the cryptographic coprocessor, realizing the use of hardware computing resources, while the software computing resources of other idle processor cores (namely, the processor cores 1 to n) cannot be used. Obviously, both the "sw_scheduler" asynchronous engine and the "dpdk_cryptodev" asynchronous engine are wasteful of computing resources, and cannot realize the simultaneous use of hardware resources and software resources.

In view of the above, the embodiments of the present disclosure provide a new data processing scheme, the data vectors are acquired from a ring buffer both by a host processor core bound to a network card and by a slave processor core located in a computing architecture in which the host processor core is located, so as to fully utilize the host processor core and the slave processor core to perform encryption/decryption processing and improve efficiency of data processing. In addition, in the case where the host processor core is configured with a cryptographic coprocessor, after acquiring the data vector, the host processor core may use the cryptographic coprocessor to perform encryption/decryption processing on the data indicated by the data vector. After acquiring the data vector, the slave processor core can use an encryption/decryption program to perform encryption/decryption processing on the data indicated by the data vector, to realize the simultaneous use of hardware computing resources and software computing resources to perform encryption/decryption processing, and effectively guarantee the computing power requirements of the IPSec.

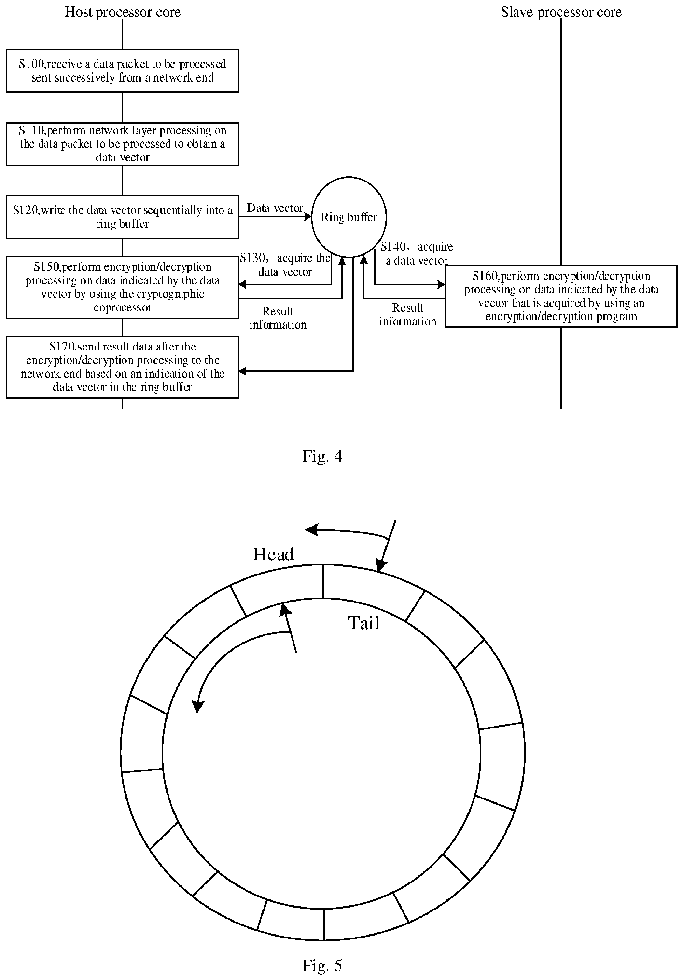

In view of the above, Fig. 4 exemplarily shows an optional schematic flowchart of the data processing method provided by the embodiments of the present disclosure. As shown in Fig. 4, the following steps may be included.

S100, the host processor core receives a data packet to be processed sent successively from a network end.

The host processor core may be a network card-bound processor core configured for promoting overall performance considerations of the processor, and may be configured with a cryptographic coprocessor for providing hardware device-based encryption/decryption services, digest computation services, etc. for the host processor core. Herein, the cryptographic coprocessor is internally solidified and provided with a chip private key, and the chip private key does not allow any device other than the cryptographic coprocessor to read to ensure the security of data.

It can be understood that, in a processor core provided with a cryptographic coprocessor, since a device for executing the encryption/decryption processing of data is a cryptographic coprocessor, the processor core is only responsible for data interaction with the cryptographic coprocessor, and only involves a logical judgement and a memory copy operation in an algorithm process, and the occupation rate thereof is low, and the calculation force thereof is relatively rich. Thus, to effectively use the idle computing power of the processor core, the processor core may be bound with the network card, so that the processor core can take into account the transceiving work of the data packet to be processed sent by the network end and the network layer processing work. Among other things, the processor core bound to the network card may be referred to as a "host processor core", and other processor cores within the computing architecture in which the host processor core resides may be referred to as "slave processor cores". As an alternative implementation, the host processor core and the slave processor core may be initialization phase of the multi-core processor based on the initial status information of each processor core. Moreover, in a chip having a cryptographic coprocessor, a processor core configured with a cryptographic coprocessor may be correspondingly matched according to the number of cryptographic coprocessors, so that the processor core configured with the cryptographic coprocessor may perform an encryption/decryption processing of data by using hardware, and the processor cores not configured with the cryptographic coprocessor may perform an encryption/decryption processing of data by using software (e.g., an encryption/decryption program). The host processor core must be configured with a cryptographic coprocessor.

S110, the host processor core performs network layer processing on the data packet to be processed to obtain a data vector.

The data vector may be obtained from performing the network layer processing on the data packet to be processed by the host processor core. The data vector may correspond to a data memory address indicating the data packet to be processed.

S120, the host processor core writes the data vector sequentially into a ring buffer.

**In** the process of data processing by using VPP technology, based on the ring buffer for storing data vectors provided thereby, the context switch and memory copy of the kernel space are reduced, and the throughput of the network is improved and the delay is reduced. The host processor core may, according to the order of receiving the data packet to be processed, record the data vector obtained by performing network layer processing on the data packet to be processed into the ring buffer sequentially.

It should be noted that the ring buffer of embodiments of the present disclosure may correspond to all processor cores in a multi-core processor such that all processor cores may acquire the data vector in the ring buffer. That is to say, by the host processor writing the data vectors sequentially into the ring buffer, the host processor core can execute S130. The host processor core acquires the data vector in the ring buffer, and the slave processor core located in the computing architecture where the host processor core is located executes the S140. The slave processor core acquires the data vector in the ring buffer, so as to make full use of the host processor core and the slave processor core to execute the encryption/decryption processing and improve the efficiency of data processing.

Further, after acquiring the data vector, the host processor core may perform S 150 and the slave processor core may perform S160.

S150, the host processor core performs encryption/decryption processing on the data indicated by the data vector by using a cryptographic coprocessor.

S160, the slave processor core performs encryption/decryption processing on data indicated by the data vector by using an encryption/decryption program after acquiring the data vector.

In the case where the host processor core is configured with a cryptographic coprocessor, the host processor core may use the cryptographic coprocessor to perform encryption/decryption processing on the data indicated by the data vector that is acquired so as to obtain first result data and feed back the result information to the ring buffer. Also, the slave processor may perform encryption/decryption processing on the data indicated by the data vector that is acquired by using an encryption/decryption program to obtain second result data, and feeding back the result information to the ring buffer.

It should be noted that as an optional implementation, when the slave processor core is configured with the cryptographic coprocessor, based on the function of the cryptographic coprocessor to perform an encryption/decryption processing on the data, the second result data obtained in the S160 may be obtained after the slave processor core performs encryption/decryption processing on the data indicated by the data vector that is acquired by using the cryptographic coprocessor. After obtaining the second result data, the result information is fed back to the ring buffer. When the cryptographic coprocessor is configured with a direct memory access queue, the slave processor core may send the data vector that is acquired to the direct memory access queue, so when the cryptographic coprocessor is used to perform encryption/decryption processing on the data indicated by the data vector that is acquired, it may specifically be that the cryptographic coprocessor is used to perform encryption/decryption processing on the data indicated by the data vector in the direct memory access queue.

Herein, the result information may be that the encryption/decryption process of the data indicated by the data vector fails, or the encryption/decryption process of the data indicated by the data vector succeeds. When the encryption/decryption processing of the data indicated by the data vector indicates that the encryption/decryption processing of the data indicated by the data vector is not completed. When the encryption/decryption process of the data indicated by the data vector fails or succeeds, it indicates that the encryption/decryption process of the data indicated by the data vector has been completed.

It should be noted that in the embodiments of the present disclosure, the host processor core performs encryption/decryption processing on the data indicated by the data vector that is acquired by using the cryptographic coprocessor, so that the host processor core can immediately return to perform other operations after sending the data vector that is acquired to the cryptographic coprocessor. However, since the slave processor core performs encryption/decryption processing on the data indicated by the data vector that is acquired by using its own encryption/decryption program, the slave processor core may return to perform the next operation only after finishing the encryption/decryption processing on the data indicated by the data vector that is acquired.

S170, the host processor core sends result data after the encryption/decryption processing to the network end based on an indication of the data vector in the ring buffer.

Where both the host processor core and the slave processor core feed back result information to the ring buffer, the result data may include first result data and second result data.

The data processing method provided by the embodiments of the present disclosure may perform network layer processing on received a data packet to be processed sent by a network end based on a host processor core bound to a network card, to obtain a data vector. Then, it may write the data vector successively into a ring buffer, so that the host processor core and a slave processor core located in a computing architecture where the host processor core is located acquire the data vector, thereby fully utilizing the host processor core and the slave processor core to perform encryption/decryption processing, and improving efficiency of the efficiency of data processing.

In addition, after acquiring the data vector, the host processor core, based on the configured cryptographic coprocessor, may perform encryption/decryption processing on the data indicated by the data vector to obtain first result data by using the cryptographic coprocessor, and feed back result information to the ring buffer to realize the encryption/decryption processing on the data indicated by the data vector based on the hardware device (namely, the cryptographic coprocessor). After acquiring the data vector, the slave processor core may perform the encryption/decryption processing on the data indicated by the data vector by using an encryption/decryption program to obtain second result data, and feed back the result information to the ring buffer to realize the encryption/decryption processing on the data indicated by the data vector based on a software program (namely, the encryption/decryption program). Further, the result data after the encryption/decryption processing is sent to the network end based on the indication of the data vector in the ring buffer. It can be seen that the embodiments of the present disclosure can perform the encryption/decryption processing by using both hardware computing resources and software computing resources, effectively guaranteeing the computational requirements of the IPSec.

In some embodiments, to facilitate the cryptographic coprocessor to perform the encryption/decryption processing on the data indicated by the data vector, the cryptographic coprocessor of embodiments of the present disclosure may be provided with a direct memory access queue (DMA queue) for storing the data vector that the host processor core is required to perform the encryption/decryption processing by the cryptographic coprocessor.

Thus, after the host processor core acquires a data vector from the ring buffer, and before the host processor core performs encryption/decryption processing on the data indicated by the data vector by using the cryptographic coprocessor, the host processor core may also send the data vector that is acquired to the direct memory access queue.

Based on the storage of the data vector by the direct memory access queue, the host processor core performs encryption/decryption processing on the data indicated by the data vector by using the cryptographic coprocessor, which may specifically be that the host processor core performs encryption/decryption processing on the data indicated by the data vector in the direct memory access queue by using the cryptographic coprocessor.

In some embodiments, Fig. 5 exemplarily shows an optional structural schematic diagram of a ring buffer provided by the embodiments of the present disclosure. As shown in Fig. 5, the ring buffer may include a Head and a Tail, and a head pointer indicating the position of the head may be provided corresponding to the head and a tail pointer indicating the position of the tail may be provided corresponding to the tail, thereby forming a closed-loop structure accommodating a fixed number of elements.

Based on the head-to-tail structure of the ring buffer, when writing data vector sequentially to the ring buffer, the data vector may be sequentially posted to the head position indicated by the head pointer of the ring buffer. Herein, the head position indicated by the head pointer of the ring buffer is advanced by one bit (in the direction indicated by the arrow in the figure) when each data vector is written. When the result data after performing the encryption/decryption processing is sent to the network end based on the indication of the data vector in the ring buffer, the result data after performing the encryption/decryption processing may be sent to the network end based on the indication of the data vector in the ring buffer according to the tail position indicated by the tail pointer. Herein, the tail position indicated by the tail pointer of the ring buffer is advanced by one bit (in the direction indicated by the arrow in the figure).

In some embodiments, in order to extract the result data that have been processed in a ring buffer, a status flag bit may be set corresponding to a data vector in the ring buffer, and the status flag bit is used for indicating an encryption/decryption processing status of the data indicated by the data vector. Thus, the status flag bit may be updated based on the result information after the cryptographic coprocessor, or the slave processor core, feeds back the result information to the ring buffer. In response to the status flag bit being a first value (e.g., 0), it may indicate that the encryption/decryption processing of the data indicated by the data vector is not completed. In response to the status flag bit being a second value (e.g., 1), it may indicate that the encryption/decryption processing of the data indicated by the data vector is completed.

As an optional implementation, based on an indication of a data vector in the ring buffer, the result data sent to the network end after performing the encryption/decryption processing, a status flag bit of a corresponding data vector may be the second value in the ring buffer. Namely, in the ring buffer, only the result data of the data indicated by the completed data vector indicated by the status flag bit may be sent to the network end.

In some embodiments, since the ring buffer is a closed-loop structure, when a host processor core and a slave processor core share the ring buffer, in order to ensure data consistency of the ring buffer and avoidance of race conditions in a concurrent environment, the host processor core and the slave processor core may acquire the data vector in the ring buffer based on a Compare and Swap (CAS)mechanism. Herein, the CAS mechanism provides a way of atomic operation to check whether the current value has changed or not, update the data when it has not changed, otherwise take no action. By the CAS operation, the threads of the processor core can compete without synchronization, which improves the concurrent performance of the system.

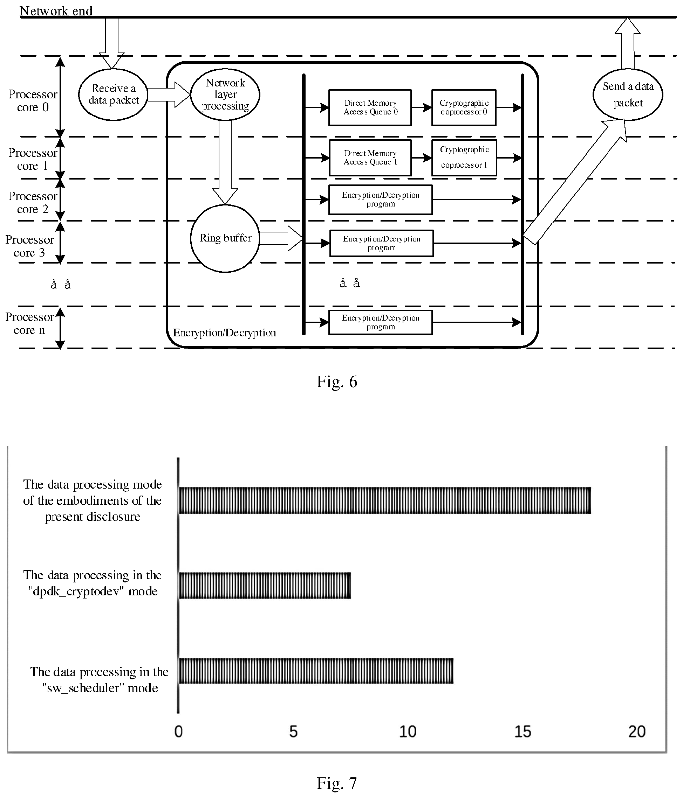

To facilitate an understanding of the data processing method of embodiments of the present disclosure, Fig. 6 is illustratively shown a data processing flow diagram provided by the embodiments of the present disclosure, with processor cores 0 to n being a plurality of processor cores of a processor, the processor core 0 being configured for being bound to a network card, and processor core 0 and processor core 1 being configured with a cryptographic coprocessor.

As shown in Fig. 6, on the thread where the processor core 0 is located, the processor core 0 may perform the tasks of data packet transceiving and network layer processing. After the processor core 0 sends the data vector obtained by network layer processing to the ring buffer facing all the processor cores, the processor core 0 to the processor core n may all obtain the data vector in the ring buffer and perform the data encryption/decryption processing.

Since the processor core 0 and the processor core 1 are configured with a cryptographic coprocessor, the processor core 0 can send the data vector that is acquired thereby to the direct memory access queue 0 of the corresponding cryptographic coprocessor 0 for storage, and then the cryptographic coprocessor 0 can acquire the data vector in the direct memory access queue 0, perform encryption/decryption processing on the data indicated by the data vector, obtain result data, and feed back the result information to the ring buffer. By the same reasoning, the processor core 1 can send the data vector that is acquired thereby to the direct memory access queue 1 of the corresponding cryptographic coprocessor 1 for storage, and then the cryptographic coprocessor 1 can acquire the data vector in the direct memory access queue 1, and perform encryption/decryption processing on the data indicated by the data vector to obtain result data and feed back the result information to the ring buffer. After the processor cores 2 to n acquire the data vector in the ring buffer, an encryption/decryption program may be used to perform encryption/decryption processing on the data indicated by the data vector to obtain the result data, and the result information is fed back to the ring buffer.

In order to clearly understand the degree of performance improvement of the data processing method according to the embodiments of the present disclosure, the data processing performed by the data processing method according to the embodiments of the present disclosure can be compared with the data processing in the "dpdk_cryptodev" mode and the data processing in the "sw_scheduler" mode by simulation, so as to obtain a performance comparison schematic diagram shown in Fig. 7. The horizontal axis is the performance index of the data processing and the vertical axis is the adopted data processing mode. Referring to Fig. 7, it can be seen that the data processing performance of the data processing mode of the embodiments of the present disclosure is significantly higher than the data processing performance in the "dpdk_cryptodev" mode and the data processing performance in the "sw_scheduler" mode.

The data processing method provided by the embodiments of the present disclosure may perform network layer processing on received a data packet to be processed sent by a network end based on a host processor core bound to a network card, so as to obtain a data vector. Then, it may write the data vector successively into a ring buffer, so that the host processor core and a slave processor core located in a computing architecture where the host processor core is located acquire the data vector, thereby fully utilizing the host processor core and the slave processor core to perform encryption/decryption processing, and improving efficiency of the efficiency of data processing.

In addition, after acquiring the data vector, the host processor core, based on the configured cryptographic coprocessor, may perform encryption/decryption processing on the data indicated by the data vector to obtain first result data by using the cryptographic coprocessor, and feed back result information to the ring buffer to realize the encryption/decryption processing on the data indicated by the data vector based on the hardware device (namely, the cryptographic coprocessor). After acquiring the data vector, the slave processor core may perform the encryption/decryption processing on the data indicated by the data vector by using an encryption/decryption program to obtain second result data, and feed back the result information to the ring buffer to realize the encryption/decryption processing on the data indicated by the data vector based on a software program (namely, the encryption/decryption program). Further, the result data after the encryption/decryption processing is sent to the network end based on the indication of the data vector in the ring buffer. It can be seen that the embodiments of the present disclosure can perform the encryption/decryption processing by using both hardware computing resources and software computing resources, effectively guaranteeing the computational requirements of the IPSec.

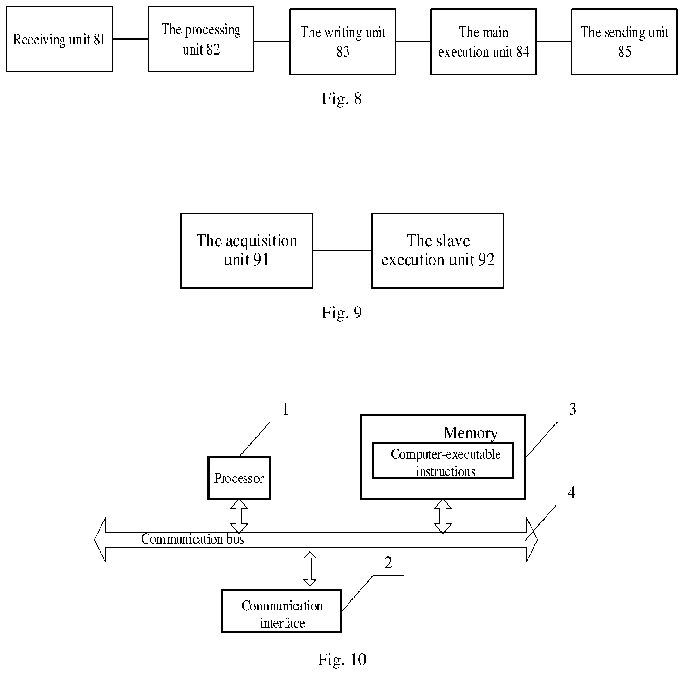

Embodiments of the present disclosure provide a data processing apparatus, the structure of which can be seen from Fig. 8. The data processing apparatus can be applied to a host processor core bound to a network card, and the host processor core is configured with a cryptographic coprocessor. The data processing apparatus can be configured for executing a data processing method implemented by the host processor core execution provided by embodiments of the present disclosure. Herein, the contents described below can be considered as functional modules required by a data processing apparatus to implement a data processing method provided by the embodiments of the present disclosure, and the contents described below can be referred to with corresponding reference to the above description.

As shown in Fig. 8, the data processing apparatus may include a receiving unit 81, a processing unit 82, a writing unit 83, a main execution unit 84, and a sending unit 85.

The receiving unit 81 is configured to receive a data packet to be processed sent successively from a network end.

The processing unit 82 is configured to perform network layer processing on the data packet to be processed to obtain a data vector.

The writing unit 83 is configured to write the data vector sequentially into a ring buffer, so that the host processor core and a slave processor core located in a computing architecture where the host processor core is located acquire the data vector.

The main execution unit 84 is configured to, after acquiring the data vector, perform encryption/decryption processing on data indicated by the data vector by using the cryptographic coprocessor to obtain first result data, and feed back result information to the ring buffer.

The sending unit 85 is configured to send result data after the encryption/decryption processing to the network end based on an indication of the data vector in the ring buffer; where the result data includes the first result data and second result data; the second result data is obtained after the slave processor core performs the encryption/decryption processing on the data indicated by the data vector by using an encryption/decryption program after acquiring the data vector; and the result information is fed back to the ring buffer after obtaining the second result data.

Optionally, the cryptographic coprocessor is configured with a direct memory access queue;
after the main execution unit 84 acquiring the data vector, and before the performing encryption/decryption processing on data indicated by the data vector by using the cryptographic coprocessor, further includes:
sending the data vector that is acquired to the direct memory access queue;
the main execution unit 84 performing the encryption/decryption processing on the data indicated by the data vector by using the cryptographic coprocessor includes: performing the encryption/decryption processing on the data indicated by the data vector in the direct memory access queue by using the cryptographic coprocessor.

Optionally, the ring buffer includes a head and a tail; a head pointer indicating a head position is provided corresponding to the head; and a tail pointer indicating a tail position is provided corresponding to the tail;
the writing unit 83 writing the data vector sequentially into the ring buffer includes:
writing the data vector sequentially to the head position indicated by the head pointer of the ring buffer; where the head position indicated by the head pointer of the ring buffer is advanced by one bit when each data vector is written; and
the sending unit 85 sending the result data after the encryption/decryption processing to the network end based on the indication of the data vector in the ring buffer includes:
   sending the result data after performing the encryption/decryption processing to the network end according to the tail position indicated by the tail pointer and based on the indication of the data vector in the ring buffer; where the tail position indicated by the tail pointer of the ring buffer is advanced by one bit when each result data is sent.

Optionally, a status flag bit is set corresponding to the data vector in the ring buffer, and the status flag bit is used for indicating an encryption/decryption processing status of the data indicated by the data vector; and
after feeding back the result information to the ring buffer, the main execution unit 84 updates the status flag bit based on the result information; where in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

Optionally, the sending unit 85 sends the result data after performing the encryption/decryption process to the network end based on the indication of the data vector in the ring buffer in which the status flag bit of the corresponding data vector is the second value.

Optionally, the host processor core acquires the data vector in the ring buffer based on a Compare and Swap (CAS) mechanism.

Optionally, in response to the slave processor core being configured with the cryptographic coprocessor, the second result data sent by the sending unit 85 is obtained after performing the encryption/decryption processing on the data indicated by the data vector by using the cryptographic coprocessor after the slave processor core obtains the data vector; and after obtaining the second result data, the result information is fed back to the ring buffer.

Embodiments of the present disclosure also provide a data processing apparatus, the structure of which may be illustrated with reference to Fig. 9, which may be applied to a host processor core. The data processing apparatus may be configured for performing the data processing method implemented by the slave processor core execution provided by the embodiments of the present disclosure. Herein, the contents described below can be considered as functional modules required by a data processing apparatus to implement a data processing method provided by an embodiment of the present disclosure, and the contents described below can be referred to with corresponding reference to the above description.

As shown in Fig. 9, the data processing apparatus may include an acquisition unit 91 and a slave execution unit 92.

The acquisition unit 91 is configured to acquire a data vector in a ring buffer; where the data vector is obtained by performing network layer processing on a data packet to be processed when a host processor core located in a computing architecture where the slave processor core is located receives the data packet to be processed sent by a network end, and the data vector is written in the ring buffer sequentially; the host processor core is bound with a network card and is configured with a cryptographic coprocessor.

The slave execution unit 92 is configured to perform encryption/decryption processing on the data indicated by the data vector that is acquired by using an encryption/decryption program to obtain second result data, and feed back the result information to the ring buffer.

Optionally, the slave processor core acquires the data vector in the ring buffer based on a Compare and Swap (CAS) mechanism.

Optionally, when the slave processor core is configured with a cryptographic coprocessor, the second result data sent by the slave execution unit 92 is obtained after performing the encryption/decryption processing on the data indicated by the data vector that is acquired by using the cryptographic coprocessor; and the result information is fed back to the ring buffer after obtaining the second result data.

Optionally, a status flag bit is set corresponding to the data vector in the ring buffer, and the status flag bit is used for indicating an encryption/decryption processing status of the data indicated by the data vector; and
after feeding back the result information to the ring buffer, the slave execution unit 92 updates the status flag bit based on the result information; where in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

Embodiments of the present disclosure also provide a processor that may be configured for performing the data processing method provided by the embodiments of the present disclosure. In an optional implementation, described in conjunction with the foregoing, a processor may include a host processor core, a slave processor core, and an asynchronous engine, the host processor core being bound to a network card and configured with a cryptographic coprocessor. The functions and refinements of the host processor core, the slave processor core, the asynchronous engine and the cryptographic coprocessor can be described with reference to the corresponding sections above.

The host processor core is configured to schedule the asynchronous engine and the cryptographic coprocessor to execute a data processing method executed by the host processor core according to the embodiments of the present disclosure; and
the slave processor core is configured to, based on scheduling of the host processor core on the asynchronous engine, perform the data processing method according to the embodiments of the present disclosure.

In some embodiments, the host processor core and the slave processor core are allocated based on at least initial status information of each processor core when the processor is initialized.

Embodiments of the present disclosure also provide a chip including a processor provided by embodiments of the present disclosure.

Embodiments of the present disclosure also provide a computing device that can implement the data processing method provided by the embodiments of the present disclosure by providing the above-described chip. As an optional implementation, Fig. 10 is an optional block diagram of a computing device provided by the embodiments of the present disclosure. As shown in Fig. 10, the electronic device may include at least one processor 1, at least one communication interface 2, at least one memory 3 and at least one communication bus 4.

In the embodiments of the present disclosure, the number of the processor 1, the communication interface 2, the memory 3, and the communication bus 4 is at least one, and the processor 1, the communication interface 2, and the memory 3 communicate with each other by the communication bus 4.

Optionally, the communication interface 2 may be an interface to a communication module for network communication.

Optionally, the processor 1 may be a CPU (Central Processing Unit), a GPU (Graphics Processing Unit, graphics processor), an NPU (Embedded Neural Network Processing Unit), a FPGA (Field Programmable Gate Array), a TPU (Tensor Processing Unit), an AI chip, a specific integrated circuit ASIC (Application Specific Integrated Circuit), or one or more integrated circuits configured for implementing embodiments of the present disclosure, etc.

The volatile memory 3 may include a high-speed RAM memory, but may also include a nonvolatile memory, such as at least one disk memory.

When the memory 3 stores one or more computer-executable instructions, the processor 1 calls the one or more computer-executable instructions to perform the data processing method of the embodiments of the present disclosure.

Embodiments of the present disclosure also provide a storage medium storing one or more computer-executable instructions that, when executed, implement a data processing method as embodiments of the present disclosure.

Embodiments of the present disclosure also provide a computer program product including one or more computer-executable instructions which, when executed, implement a data processing method as embodiments of the present disclosure.

The preceding text describes a plurality of embodiments provided by the embodiments of the present disclosure. The various optional methods introduced in each embodiment can be combined with each other and cross-referenced without conflict, thereby giving rise to a variety of possible embodiments. All of these can be considered as embodiments disclosed and made public by the disclosed embodiments.

Although the embodiments of the present disclosure are described as above, the disclosure is not limited to these. Any person of ordinary skill in the art can make various modifications and changes without departing from the spirit and scope of the disclosure. Therefore, the scope of protection of the disclosure should be determined by the scope defined in the claims.

## Claims

1. A data processing method applied to a host processor core bound to a network card, and the host processor core being configured with a cryptographic coprocessor, wherein the method comprises:
receiving a data packet to be processed sent successively from a network end;
performing network layer processing on the data packet to be processed to obtain a data vector;
writing the data vector sequentially into a ring buffer, so that the host processor core and a slave processor core located in a computing architecture where the host processor core is located acquire the data vector;
after acquiring the data vector, performing encryption/decryption processing on data indicated by the data vector by using the cryptographic coprocessor to obtain first result data, and feeding back result information to the ring buffer; and
sending result data after the encryption/decryption processing to the network end based on an indication of the data vector in the ring buffer, wherein the result data comprises the first result data and second result data; the second result data is obtained after the slave processor core performs the encryption/decryption processing on the data indicated by the data vector by using an encryption/decryption program after acquiring the data vector; and the result information is fed back to the ring buffer after obtaining the second result data.

2. The method according to claim 1, wherein the cryptographic coprocessor is configured with a direct memory access queue;
after acquiring the data vector, and before performing the encryption/decryption processing on the data indicated by the data vector by using the cryptographic coprocessor, the method further comprises:
sending the data vector that is acquired to the direct memory access queue,
wherein performing the encryption/decryption processing on the data indicated by the data vector by using the cryptographic coprocessor comprises: performing the encryption/decryption processing on the data indicated by the data vector in the direct memory access queue by using the cryptographic coprocessor.

3. The method according to claim 1 or 2, wherein the ring buffer comprises a head and a tail; a head pointer indicating a head position is provided corresponding to the head; and a tail pointer indicating a tail position is provided corresponding to the tail,
wherein writing the data vector sequentially into the ring buffer comprises:
writing the data vector sequentially to the head position indicated by the head pointer of the ring buffer, wherein the head position indicated by the head pointer of the ring buffer is advanced by one bit when each data vector is written,
wherein sending the result data after the encryption/decryption processing to the network end based on the indication of the data vector in the ring buffer comprises:
sending the result data after performing the encryption/decryption processing to the network end according to the tail position indicated by the tail pointer and based on the indication of the data vector in the ring buffer, wherein the tail position indicated by the tail pointer of the ring buffer is advanced by one bit when each result data is sent.

4. The method according to claim 3, wherein a status flag bit is set corresponding to the data vector in the ring buffer, and the status flag bit is used for indicating an encryption/decryption processing status of the data indicated by the data vector; and
after feeding back the result information to the ring buffer, the status flag bit is updated based on the result information, wherein in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

5. The method according to claim 4, wherein the result data after performing the encryption/decryption processing is sent to the network end based on the indication of the data vector in the ring buffer in which the status flag bit of a corresponding data vector is the second value.

6. The method according to any one of claims 1-5, wherein the host processor core acquires the data vector in the ring buffer based on a Compare and Swap (CAS) mechanism.

7. The method according to any one of claims 1-6, wherein in response to the slave processor core being configured with the cryptographic coprocessor, the second result data comprised in the result data is obtained after performing the encryption/decryption processing on the data indicated by the data vector by using the cryptographic coprocessor after the slave processor core obtains the data vector; and after obtaining the second result data, the result information is fed back to the ring buffer.

8. A data processing method applied to a slave processor core, comprising:
acquiring a data vector in a ring buffer, wherein the data vector is obtained by performing network layer processing on a data packet to be processed when a host processor core located in a computing architecture where the slave processor core is located receives the data packet to be processed sent by a network end, and the data vector is written in the ring buffer sequentially; the host processor core is bound with a network card and is configured with a cryptographic coprocessor; and
performing encryption/decryption processing on data indicated by the data vector that is acquired by using an encryption/decryption program to obtain second result data, and feeding back result information to the ring buffer.

9. The method according to claim 8, wherein the slave processor core acquires the data vector in the ring buffer based on a Compare and Swap (CAS) mechanism.

10. The method according to claim 8 or 9, wherein in response to the slave processor core being configured with the cryptographic coprocessor, the second result data is obtained after performing the encryption/decryption processing on the data indicated by the data vector that is acquired by using the cryptographic coprocessor; and the result information is fed back to the ring buffer after obtaining the second result data.

11. The method according to any one of claims 8-10, wherein a status flag bit is set corresponding to the data vector in the ring buffer, and the status flag bit is used for indicating an encryption/decryption processing status of the data indicated by the data vector; and
after feeding back the result information to the ring buffer, the status flag bit is updated based on the result information, wherein in response to the status flag bit being a first value, the status flag bit indicates that the encryption/decryption processing of the data indicated by the data vector is not completed; and in response to the status flag bit being a second value, the status flag bit indicates that the encryption/decryption processing of the data indicated by the data vector is completed.

12. A data processing apparatus applied to a host processor core bound to a network card, and the host processor core being configured with a cryptographic coprocessor, wherein the apparatus comprises:
a receiving unit, configured to, receive a data packet to be processed sent successively from a network end;
a processing unit, configured to, perform network layer processing on the data packet to be processed to obtain a data vector;
a writing unit, configured to, write the data vector sequentially into a ring buffer, so that the host processor core and a slave processor core located in a computing architecture where the host processor core is located acquire the data vector;
a main execution unit, configured to, after acquiring the data vector, perform encryption/decryption processing on data indicated by the data vector by using the cryptographic coprocessor to obtain first result data, and feed back result information to the ring buffer; and
a sending unit, configured to, send result data after the encryption/decryption processing to the network end based on an indication of the data vector in the ring buffer, wherein the result data comprises the first result data and second result data; the second result data is obtained after the slave processor core performs the encryption/decryption processing on the data indicated by the data vector by using an encryption/decryption program after acquiring the data vector; and the result information is fed back to the ring buffer after obtaining the second result data.

13. A data processing apparatus applied to a slave processor core, comprising:
an acquisition unit, configured to, acquire a data vector in a ring buffer; wherein the data vector is obtained by performing network layer processing on a data packet to be processed when a host processor core located in a computing architecture where the slave processor core is located receives the data packet to be processed sent by a network end, and the data vector is written in the ring buffer sequentially; the host processor core is bound with a network card and is configured with a cryptographic coprocessor; and
a slave execution unit, configured to, perform encryption/decryption processing on data indicated by the data vector that is acquired by using an encryption/decryption program to obtain second result data, and feed back result information to the ring buffer.

14. A processor, comprising: a host processor core, a slave processor core, and an asynchronous engine; wherein the host processor core is bound with a network card, and is configured with a cryptographic coprocessor;
the host processor core is configured to schedule the asynchronous engine and the cryptographic coprocessor to execute the data processing method according to any one of claims 1-7; and
the slave processor core is configured to, based on scheduling of the host processor core on the asynchronous engine, perform the data processing method according to any one of claims 8-11.

15. The processor according to claim 14, wherein the host processor core and the slave processor core are allocated based on at least initial status information of each processor core when the processor is initialized.

16. A chip, comprising the processor according to any one of claims 14-15.

17. A computing device, comprising the chip according to claim 16.

18. A storage medium storing one or more computer-executable instructions, wherein the one or more computer-executable instructions, when executed, implement the data processing method according to any one of claims 1-7 or claims 8-11.

19. A computer program product comprising one or more computer-executable instructions, wherein the one or more computer-executable instructions, when executed, implement the data processing method according to any one of claims 1-7 or claims 8-11.
